# EUROPÄISCHE PATENTANMELDUNG

(11) **EP 1 076 188 A2**
(43) Veröffentlichungstag der Anmeldung: **14.02.2001**
(21) Anmeldenummer: 00890180.3
(22) Anmeldetag: 02.06.2000
(51) Int. Cl.: F16D 3/76

(54) **Drehelastische Kupplung**

(30) Priorität: 10.08.1999 AT 137199
(71) Anmelder: Ellergon Antriebstechnik GmbH, 5300 Hallwang/Salzburg (AT)
(72) Erfinder: Geislinger, Matthias, Dipl.-Ing., 5026 Salzburg (AT)
(74) Vertreter: Hübscher, Heiner, Dipl.-Ing.

(57) **Zusammenfassung**

Es wird eine drehelastische Kupplung mit einem gegenüber einer Nabe (1) elastisch verdrehbaren Außenkranz (5) beschrieben. Um vorteilhafte Konstruktionsbedingungen zu schaffen, wird vorgeschlagen, daß zwischen der Nabe (1) und dem Außenkranz (5) zumindest ein ringartiger Verbundkörper (2) vorgesehen ist, der aus wenigstens einer spiralartig verlaufenden Schicht (3) eines Elastomers besteht und daß die Windungen dieser spiralartigen Schicht (3) mit einer die Zwischenräume zwischen den Windungen ausfüllenden, zugelastischen, biegsamen Zwischenschicht (4) schubfest verbunden sind, deren Zug- und Schubelastizität kleiner als die der elastomeren Schicht (3) ist.

## Beschreibung

Die Erfindung bezieht sich auf eine drehelastische Kupplung mit einem gegenüber einer Nabe elastisch verdrehbaren Außenkranz.

Um in einer Antriebsverbindung eine einfach aufgebaute, drehelastische Kupplung vorzusehen, ist es bekannt, als Kupplung eine gummielastische Scheibe anzuordnen, die nabenseitig an den einen und außenkranzseitig an den anderen der zu verbindenden Antriebsstränge drehfest angeschlossen ist. Solche gummielastischen Kupplungsscheiben können allerdings nur für die Übertragung vergleichsweise niedriger Drehmomente eingesetzt werden. Zur Übertragung höherer Drehmomente werden entweder aufwendige, mehrscheibige Gummikupplungen oder Kupplungen verwendet, deren Außenkranz mit der Nabe über radiale Blattfedern verbunden ist. Zur Dämpfung dieser drehelastischen Kupplungen sind die sich zwischen Außenkranz und Nabe ergebenden, mit Flüssigkeit gefüllten Kammern miteinander über Drosselkanäle hydraulisch verbunden, so daß bei einer gegenseitigen Verdrehung von Außenkranz und Nabe Flüssigkeit zwischen den Kammern verdrängt wird. Solche gedämpften drehelastischen Kupplungen sind jedoch mit einem vergleichsweise großen Konstruktionsaufwand verbunden.

Gemäß der DE 43 38 039 wurde auch schon eine elastische Kupplung zur Drehmomentübertragung vorgeschlagen, die einen zwischen Nabe und einem äußeren Ringkörper angeordneten elastischen Zwischenkörper mit über je einen Umfangsabschnitt umlaufenden, einerends an der Nabe, andernends am äußeren Ringkörper stoffschlüssig angebundenen Strangteilen aufweist. Diese spitzwinkelig zu den Tangenten der Nabe verlaufenden Strangteile wirken wie elastische Speichen und sind für die Übertragung höherer Drehmomente ebenfalls ungeeignet.

Aus der DE 42 01 597 A geht weiters ein Drehschwingungsdämpfer als bekannt hervor, der zwei ineinanderliegende spiralförmige Bänder besitzt, wobei der Spalt zwischen den Bändern mit einer hochviskosen Flüssigkeit ausgefüllt ist. Jedes Band ist an einem Ende mit einer anderen Dämpferhälfte verbunden, während die anderen Enden frei bleiben, wodurch große, gedämpfte Radialverlagerungen möglich sind. Es entsteht ein reiner Drehschwingungsdämpfer, der zur elastischen Kopplung der beiden Dämpferhälften eine zusätzliche elastische Kupplung, vorzugsweise eine Gummikupplung erfordert.

Die DE 40 06 121 A offenbart eine Torsionsdämpfungsvorrichtung, die in einer Dämpfkammer zwischen einem Antriebsteil und einem Abtriebsteil eine mit dem inneren Ende am Antriebsteil und mit dem äußeren Ende am Abtriebsteil angreifende Spiralfeder aufnimmt. Bei einer Relativbewegung zwischen An- und Abtriebsteil führt die Spiralfederwindung in der mit einer hochviskosen Flüssigkeit gefüllten Dämpfkammer auch eine radiale Bewegung aus, wodurch es zur Dämpfwirkung kommt. Durch die Spiralfeder entsteht ein Torsionsdämpfer mit großen Verdrehwinkeln zwischen An- und Abtriebsteil und einer speziellen Federcharakteristik, welcher Dämpfer kaum Anregungen für den Bau einer elastischen Kupplung zur Übertragung größerer Drehmomente bietet.

Der Erfindung liegt somit die Aufgabe zugrunde, eine drehelastische Kupplung der eingangs geschilderten Art so auszugestalten, daß mit einem geringen Konstruktionsaufwand auch hohe Drehmomente bei einer ausreichenden Drehelastizität und geringem Bauvolumen übertragen werden können.

Die Erfindung löst die gestellte Aufgabe dadurch, daß zwischen der Nabe und dem Außenkranz zumindest ein ringartiger Verbundkörper vorgesehen ist, der aus wenigstens einer spiralartig verlaufenden Schicht eines Elastomers besteht und daß die Windungen dieser spiralartigen Schicht mit einer die Zwischenräume zwischen den Windungen ausfüllenden, zugelastischen, biegsamen Zwischenschicht schubfest verbunden sind, deren Zug- und Schubelastizität kleiner als die der elastomeren Schicht ist.

Da die biegsame Zwischenschicht zwischen den Windungen der spiralartig verlaufenden, elastomeren Schicht mit dieser elastomeren Schicht schubfest verbunden ist und eine kleinere Zug- und Schubelastizität als die elastomere Schicht aufweist, wird der größte Teil der Umfangskräfte über diese Zwischenschicht übertragen, so daß durch diese Maßnahme die elastomere Schicht entlastet wird und die Kupplung ein erheblich größeres Drehmoment bei gleichem Bauvolumen wie gummielastische Kupplungsscheiben übertragen kann. Die elastischen Eigenschaften der elastomeren Schicht stellen im Zusammenwirken mit der Zugelastizität der Zwischenschicht eine ausreichende Drehelastizität der Kupplung sicher, die über die Umfangslänge der elastomeren Schicht und der Zwischenschicht bei entsprechenden Abmessungen an die jeweiligen Anforderungen angepaßt werden kann. Je nach der Richtung des angreifenden Drehmomentes wird die zugelastische, biegsame Zwischenschicht auf Zug oder Druck beansprucht.

Wird nur eine spiralartig verlaufende, elastomere Schicht vorgesehen, so muß die dadurch bedingte Unwucht in Kauf genommen werden. Bei höheren Drehzahlen empfiehlt es sich daher, zumindest zwei rotationssymmetrisch angeordnete Schichten eines Elastomers mit entsprechenden Zwischenschichten vorzusehen, wobei sich die Windungslängen der elastomeren Schichten über einen Umfangswinkel erstrecken, der den gegenseitigen Winkelabstand dieser Schichten übersteigt. Durch die damit verbundene Überlappung der eine kleinere Zugelastizität als die elastomeren Schichten aufweisenden Zwischenschichten wird sichergestellt, daß über den gesamten Umfang des ringartigen Verbundkörpers der Großteil der Umfangskräfte über die Zwischenschichten übertragen werden kann.

Um bei einer entsprechenden Drehmomentbelastung eine zu große Einschnürung der spiralartig verlaufenden, elastomeren Schichten während der Zugbelastung der Zwischenschichten zu verhindern, können statt eines Verbundkörpers zwei oder mehrere konzentrisch angeordnete Verbundkörper vorgesehen werden, die jeweils durch einen Zwischenring miteinander verbunden sind, so daß der Umschlingungswinkel der spiralartig verlaufenden Schichten im Bereich der einzelnen ringförmigen Verbundkörper beschränkt bleibt und sich die spiralartig verlaufenden Schichten an diesen Zwischenringen abstützen können. Dadurch wird das Biegemoment im Einspannbereich der Zwischenschichten deutlich vermindert, was unmittelbar zu einer Entlastung dieser Zwischenschichten führt. Die Stützwirkung der den Verbundkörper in Einzelringe unterteilenden Zwischenringe wird selbstverständlich auch bei einer Drehmomentbelastung der Kupplung im Sinne einer Druckbeanspruchung der Zwischenschichten ausgenützt, um ein unzulässiges Aufdrehen der Spiralwindungen zu unterbinden.

Die zugelastischen Zwischenschichten zwischen den spiralartig verlaufenden, elastomeren Schichten können unterschiedlich aufgebaut sein. Besonders vorteilhafte Konstruktionsverhältnisse ergeben sich jedoch, wenn diese Zwischenschichten aus faserverstärktem Kunststoff oder Federstahl bestehen. Insbesondere beim Einsatz eines faserverstärkten Kunststoffes läßt sich der Verbundkörper in einfacher Weise durch einen Wickelvorgang herstellen. Die schubfeste Verbindung zwischen den einzelnen Schichten bereitet dabei keinerlei Schwierigkeiten.

In der Zeichnung ist der Erfindungsgegenstand beispielsweise dargestellt. Es zeigen
- Fig. 1: eine erfindungsgemäße drehelastische Kupplung in einer axialen Ansicht,
- Fig. 2: diese Kupplung in einem Axialschnitt nach der Linie II-II der Fig. 1,
- Fig. 3: eine Konstruktionsvariante einer erfindungsgemäßen drehelastischen Kupplung in einem Axialschnitt und
- Fig. 4: diese Kupplung in einem achsnormalen Schnitt nach der Linie IV-IV der Fig. 3.

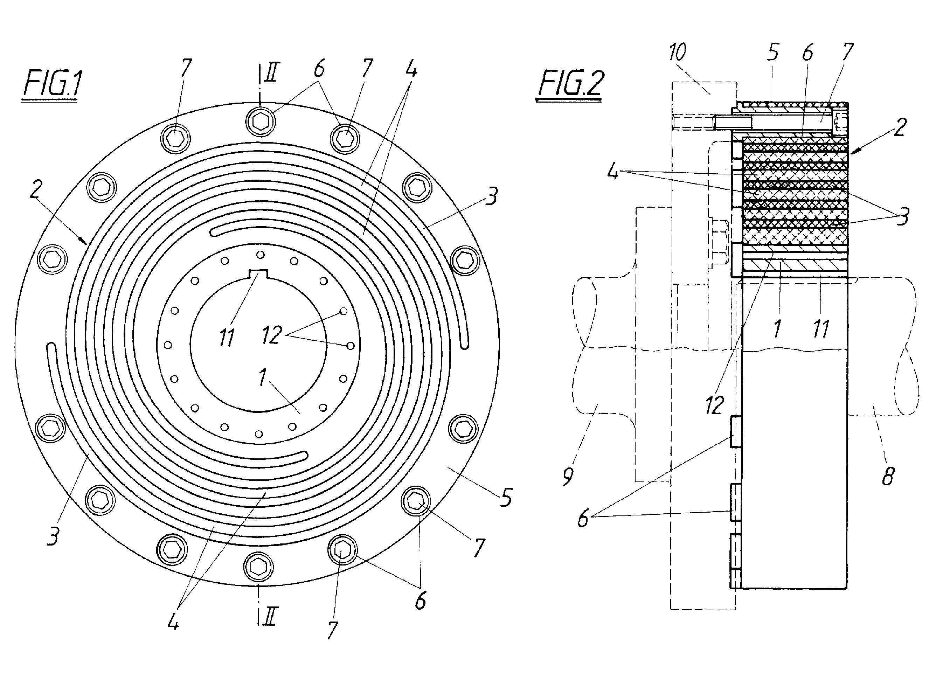

Die drehelastische Kupplung gemäß dem Ausführungsbeispiel nach den Fig. 1 und 2 weist eine Nabe 1 auf, die einen ringartigen Verbundkörper 2 trägt, der mit der Nabe 1 über eine Verklebung oder Mikroverzahnung drehfest verbunden ist. Dieser Verbundkörper 2 wird aus spiralartig verlaufenden, rotationssymmetrisch angeordneten Schichten 3 eines Elastomers gebildet, deren Windungen mit radialem Abstand ineinandergreifen, wobei die Zwischenräume zwischen den Windungen mit zugelastischen, biegsamen Zwischenschichten 4 beispielsweise aus faserverstärktem Kunststoff ausgefüllt sind. Dieser faserverstärkte Kunststoff, der mit den elastomeren Schichten 3 schubfest verbunden ist, bildet außerdem eine äußere und innere Umfangsschicht des Verbundkörpers 2. Während über die innere Umfangsschicht der Verbundkörper 2 mit der Nabe 1 verbunden ist, bildet die äußere Umfangsschicht einen Außenkranz 5, in den Hülsen 6 zur Aufnahme von Anschlußschrauben 7 eingeklebt sind. An Stelle dieses durch den faserverstärkten Kunststoff geformten Außenkranzes 5 könnte aber selbstverständlich auch ein Stahlkranz treten.

Wie der Fig. 2 entnommen werden kann, wird die drehelastische Kupplung in herkömmlicher Weise zwischen zwei Wellen 8 und 9 eines strichliert angedeuteten Antriebsstranges so eingebaut, daß die Kupplung mit der Nabe 1 auf der einen Welle 8 sitzt, während der Außenkranz 5 über die Anschlußschrauben 7 mit einem Anschlußflansch 10 der Welle 9 axial verschraubt wird. Das zwischen dem Außenkranz 5 und der Nabe 1 zu übertragende Drehmoment wird zum größten Teil von den Zwischenschichten 4 zwischen den spiralartig verlaufenden elastomeren Schichten 3 aufgenommen, weil diese Zwischenschichten 4 eine kleinere Zug- und Schubelastizität als die elastomeren Schichten 3 aufweisen, so daß die elastomeren Schichten 3 entlastet werden, was bei einer vorgegebenen zulässigen Beanspruchung der elastomeren Schichten 3 zu einem entsprechend großen, maximal übertragbaren Drehmoment führt. Aufgrund der Zugelastizität der Zwischenschichten 4 kann über die mit diesen Zwischenschichten 4 schubfest verbundenen elastomeren Schichten 3 die geforderte Drehelastizität der Kupplung sichergestellt werden. Die Anzahl der elastomeren Schichten 3 und der zugelastischen Zwischenschichten 4 sowie deren Windungslänge bestimmen dabei im Zusammenhang mit der jeweiligen Schichtdicke und der Kupplungsbreite das drehelastische Verhalten der Kupplung, das demnach auch über diese Parameter an die jeweiligen Verhältnisse angepaßt werden kann.

Die drehfeste Verbindung zwischen der Nabe 1 und der Welle 8 kann über eine Paßfeder erfolgen. Die Paßfedernut 11 ist in der Nabe 1 angedeutet, in der sich auch axiale Durchtrittsbohrungen 12 zur Belüftung der Kupplung befinden. Selbstverständlich können auch Naben mit kegeligen Preßverbänden oder Flanschnaben vorgesehen werden.

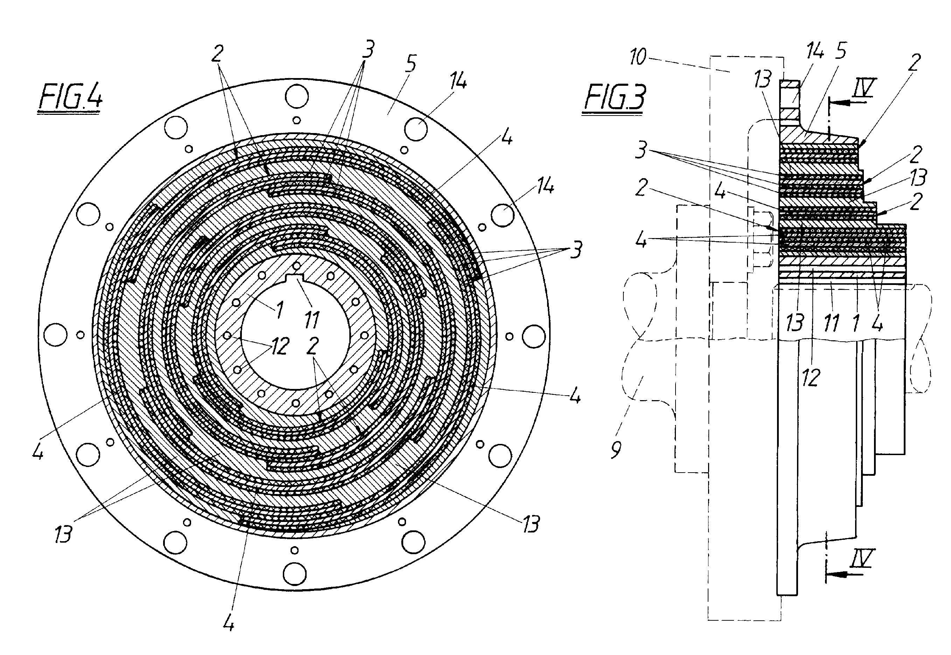

Die drehelastische Kupplung nach den Fig. 3 und 4 unterscheidet sich von der nach den Fig. 1 und 2 im wesentlichen dadurch, daß die Windungen der elastomeren Schichten 3 und der zugelastischen Zwischenschichten 4 nicht von der Nabe 1 zum Außenkranz 5 durchgehend verlaufen, sondern von Zwischenringen 13 unterbrochen werden, so daß sich zwischen diesen Zwischenringen 13 konzentrische Verbundkörper 2 aus spiralartig verlaufenden elastomeren Schichten 3 ergeben, die durch je eine Zwischenschicht 4 schubfest miteinander verbunden sind. Diese Zwischenringe 13 können aus dem für die Zwischenschichten 4 vorgesehenen, faserverstärkten Kunststoff bestehen, was jedoch keineswegs zwingend ist. Die wesentliche Wirkung dieser Zwischenringe 13 ergibt sich durch ihre Stützfunktion, die ein unzulässiges Einschnüren der elastomeren Schichten 3 bzw. ein gegensinniges Aufdrehen der elastomeren Spiralwindungen bei einer gegensinnigen Drehmomentbelastung unterbinden. Die grundsätzliche Funktion einer solchen aus mehreren konzentrisch angeordneten ringförmigen Verbundkörpern aufgebauten Kupplung bleibt naturgemäß erhalten.

Während bei der Ausführungsform nach den Fig. 3 und 4 die Nabe 1 wie bei der Kupplung gemäß den Fig. 1 und 2 über eine Paßfeder drehfest mit der Welle 8 verbunden wird, erfolgt der Anschluß über einen metallischen Außenkranz 5, der mit Durchtrittsbohrungen 14 zum Festschrauben am Anschlußflansch 10 der Welle 9 versehen ist.

Die Erfindung ist selbstverständlich nicht auf die dargestellten Ausführungsbeispiele beschränkt. So könnten beispielsweise auch zwei oder mehrere ringförmige Kupplungskörper 2 axial hintereinander angeordnet werden, um zwischen diesen Verbundkörpern entsprechende Belüftungsspalte zu schaffen. Außerdem kann die Kupplungsbreite entsprechend einer werkstoffmäßigen und fertigungstechnischen Optimierung für jeden Durchmesser frei gewählt werden.

## Patentansprüche

1. Drehelastische Kupplung mit einem gegenüber einer Nabe (1) elastisch verdrehbaren Außenkranz (5), dadurch gekennzeichnet, daß zwischen der Nabe (1) und dem Außenkranz (5) zumindest ein ringartiger Verbundkörper (2) vorgesehen ist, der aus wenigstens einer spiralartig verlaufenden Schicht (3) eines Elastomers besteht und daß die Windungen dieser spiralartigen Schicht (3) mit einer die Zwischenräume zwischen den Windungen ausfüllenden, zugelastischen, biegsamen Zwischenschicht (4) schubfest verbunden sind, deren Zug- und Schubelastizität kleiner als die der elastomeren Schicht (3) ist.

2. Kupplung nach Anspruch 1, dadurch gekennzeichnet, daß zumindest zwei rotationssymmetrisch angeordnete Schichten (3) eines Elastomers mit entsprechenden Zwischenschichten (4) vorgesehen sind, wobei sich die Windungslängen der elastomeren Schichten (3) über einen Umfangswinkel erstrecken, der den gegenseitigen Winkelabstand dieser Schichten (3) übersteigt.

3. Kupplung nach Anspruch 1 oder 2, dadurch gekennzeichnet, daß zumindest zwei konzentrisch angeordnete Verbundkörper (2) durch einen Zwischenring (13) miteinander verbunden sind.

4. Kupplung nach einem der Ansprüche 1 bis 3, dadurch gekennzeichnet, daß die Zwischenschichten (4) zwischen den spiralartig verlaufenden, elastomeren Schichten (3) aus faserverstärktem Kunststoff oder Federstahl bestehen.
